(19) Europäisches Patentamt
European Patent Office
Office européen des brevets

(11) **EP 0 724 346 B1**

(12) **FASCICULE DE BREVET EUROPEEN**

(45) Date de publication et mention
de la délivrance du brevet:
**28.05.2003 Bulletin 2003/22**

(51) Int Cl.[7]: **H04L 25/03**, H04L 7/033

(21) Numéro de dépôt: **96400157.2**

(22) Date de dépôt: **23.01.1996**

(54) **Procédé de calcul du déphasage dans un système de réception de signaux de données**

Verfahren zur Bestimmung des Phasenfehlers in einem digitalen Datenempfänger

Method for calculation of the phase error in a receiver for digital signals

(84) Etats contractants désignés:
**DE GB IT NL**

(30) Priorité: **27.01.1995 FR 9500967**

(43) Date de publication de la demande:
**31.07.1996 Bulletin 1996/31**

(73) Titulaire: **Thales**
**75008 Paris (FR)**

(72) Inventeur: **Soubaras, Hélène**
**F-92402 Courbevoie Cedex (FR)**

(56) Documents cités:
EP-A- 0 510 756          EP-A- 0 544 315
EP-A- 0 602 249          EP-A- 0 604 209
US-A- 5 263 033

• IEEE TRANSACTIONS ON INFORMATION THEORY, NOV. 1991, USA, vol. 37, no. 6, ISSN 0018-9448, page 1649 XP000235403 GEORGHIADES C N ET AL: "Sequence estimation and synchronization from nonsynchronized samples"

• IREECON '91, AUSTRALIA'S ELECTRONICS CONVENTION PROCEEDINGS, SYDNEY, NSW, AUSTRALIA, 16-20 SEPT. 1991, ISBN 0-909394-26-1, 1992, EDGECLIFF, NSW, AUSTRALIA, IREE, AUSTRALIA, pages 634-637 vol.2, XP002001191 SABEL L P: "The effect of improved signal slope estimation on the performance of symbol timing recovery for digital communications"

• RADIO COMMUNICATION RESEARCH MEETING REPORT RCS 92-33. THE INSTITUTE OF ELECTRONICS, INFORMATION AND COMMUNICATION ENGINEERS IN JAPAN, 26 Juin 1992, pages 71-76, XP000567243 K. OKANOUE / A. USHIROKAWA / Y. FURUYA: "A Fractionally Spaced MLSE Receiver Improving Degradation Caused by Sampling Phase Offset. (en japonais)"

## Description

L'invention concerne un procédé de reconstitution des informations reçues à partir d'échantillons obtenus par échantillonnage à l'aide d'une horloge asynchrone par rapport au signal d'informations reçu. L'invention est plus particulièrement applicable à la lecture des enregistrements magnétiques dans les domaines des magnétoscopes, des périphériques informatiques et des enregistreurs spéciaux professionnels.

Plus précisément, l'invention applique pour une telle réception une Estimation de Séquence par Maximum de Vraisemblance, que nous désignerons dans la suite de la description par MLSE (Maximum Likelihood Sequence Estimation), et qui utilise un algorithme de VITERBI décrit dans le document "Principles of Digital Communications and Coding" de A.J. VITERBI and al, Mc Graw-Hill, 1979. L'algorithme MLSE est lui-même décrit dans l'article "Maximum-Likelihood Sequence Estimation of Digital Sequences in the Presence of Intersymbol Interferences" de G. David FORNEY, IEEE Transactions on Information Theory, vol. IT-18, n° 3, pp 363-378, mai 1972.

Cet algorithme présente la contrainte de devoir traiter un signal échantillonné de façon synchrone aux données et à une fréquence $f_e$ égale à la fréquence $f_s$ du signal de donnée.

Dans le cas d'un système asynchrone, il faut, en plus de l'égalisation, des pré-traitements pour la remise à la bonne phase : estimation de phase (Phase Locked Loop PLL), interpolation. Ces opérations donnent par ailleurs de mauvais résultats en cas de repliement, c'est-à-dire pour des fréquences $f_e$ trop basses. Donc on prend $f_e > f_s$ (mais en rapport fractionnaire, pour des raisons d'implantation hardware), ce qui oblige à rajouter ensuite une décimation pour se ramener aussi à la bonne fréquence.

L'invention concerne l'application de l'algorithme MLSE à une réception asynchrone et elle s'étend au cas des données échantillonnées à une fréquence $f_e$ autre que la fréquence signal $f_s$. Ce qui conduit à faire un calcul de phase entre un signal de donnée et l'horloge d'échantillonnage.

On connaît d'après les documents suivants :

D1 : IEEE TRANSACTIONS ON INFORMATION THEORY, Nov 1991, USA, vol. 37, n° 6, ISSN 0018-9448, page 1649 XP000235403 GEORGHIADES C N et al : « Sequence estimation and synchronisation from nonsynchronized samples »

D2 : EP-A 0 544 315 (NEC CORPORATION)

D3 : EP-A-0 510 756 (PHILIPS' GLOEILAMPENFABRIEKEN)

D4 : EP-A-0 602 249 (OKI ELECTRIC INDUSTRY COMPANY)

D5 : EP-A-0 604 209 (NEC CORPORATION)

D6 : US-A- 5 263 033 (SESHADRI)

D7 : IREECON'91 AUSTRALIA'S ELECTRONIC CONVENTION PROCEEDINGS, SYDNEY, NSW, AUSTRALIA, 16-20 SEPT. 1991, ISBN 0-909394-26-1, 1992, EDGECLIFF, NSW, AUSTRALIA, IREE, AUSTRALIA, pages 634-637 vol.2, XP0020011191 SABEL LP : « The effect of improved signal slope estimation on the performance of symbol timing recovery for digital communications »

D8 : RADIO COMMUNICATION RESEARCH MEETING REPORT RCS 92-33. THE INSTITUTE OF ELECTRONICS, INFORMATION AND COMMUNICATION ENGINEERS IN JAPAN, 26 Juin 1992, pages 71-76, XP000567243 K. OKANOUE/A. USHIROKAWA/Y. FURUYA : « A Fractionnaly Spaced MLSE Receiver Improving Degradation Caused by Sampling Phase Offset (en japonais) »

des procédés de restitution de symboles, mais aucun d'eux ne permet de tenir compte de façon simple d'une fréquence d'échantillonnage quelconque, en particulier égale ou peu différente de la fréquence des symboles.

Selon l'invention, le procédé de reconstitution de séquences de symboles numériques se succédant à une période régulière (Ts), transmises par un canal de transmission dont on connaît la réponse impulsionnelle (h), ces signaux étant échantillonnés par un signal d'horloge dont la période (Te) est différente de celle des symboles, est caractérisé par le fait que l'on estime récursivement les déphasages entre échantillons et symboles selon un critère de maximum de vraisemblance prenant en compte, à chaque réactualisation de l'estimation, l'hypothèse de séquence d'entrée la plus vraisemblable.

Selon un aspect de l'invention, le calcul des déphasages se fait selon la formulation du gradient :

$$t_{n+1} = t_n + p/q - \alpha \, e_n \, (t_n) \, e'_n \, (t)$$

dans laquelle on a :

$t_{n+1}$ :  le signal de déphasage à calculer pour l'échantillon de rang n+1 ;

$t_n$ :  le signal de déphasage calculé antérieurement pour l'échantillon de rang n ;

p/q : rapport de la période d'horloge sur la période des données ;

$\alpha$ : un coefficient d'adaptation ;

$e_n (t_n)$ : l'erreur entre un échantillon réel et la valeur théorique qui avait été prévue pour cet échantillon ;

$e'_n (t_n)$ : la dérivée de la valeur de $e_n (t_n)$ par rapport à $t_n$ ;

la valeur $e_n (t_n)$ étant donnée par :

$$e_n (t) = \Sigma_k z_k h (n Te - kT_s + t) - y_n$$

avec :

$z_k$ : une valeur supposée de signal de donnée ;

h : la réponse impulsionnelle du canal

Et la valeur e'n(tn) étant donnée par :

$$e'_n(t) = \sum_k Z_k h'(nT_e - kT_s + t)$$

avec h' dérivée de la réponse impulsionnelle du canal par rapport au temps.

La nouveauté de l'algorithme d'estimation de phase se trouve dans l'utilisation de h'(t).

Les différents objets et caractéristiques de l'invention apparaîtront plus clairement dans la description qui va suivre et dans les figures annexées qui représentent :

- la figure 1, un schéma de chaîne de communication ;
- la figure 2, un exemple de treillis de décodage ;
- les figures 3a et 3b, un exemple de fonctionnement simplifié de l'algorithme de VITERBI ;
- la figure 4, un organigramme de décodage simplifié appliquant l'algorithme MLSE selon l'invention ;
- la figure 5, un organigramme de décodage plus détaillé appliquant l'algorithme MLSE selon l'invention.

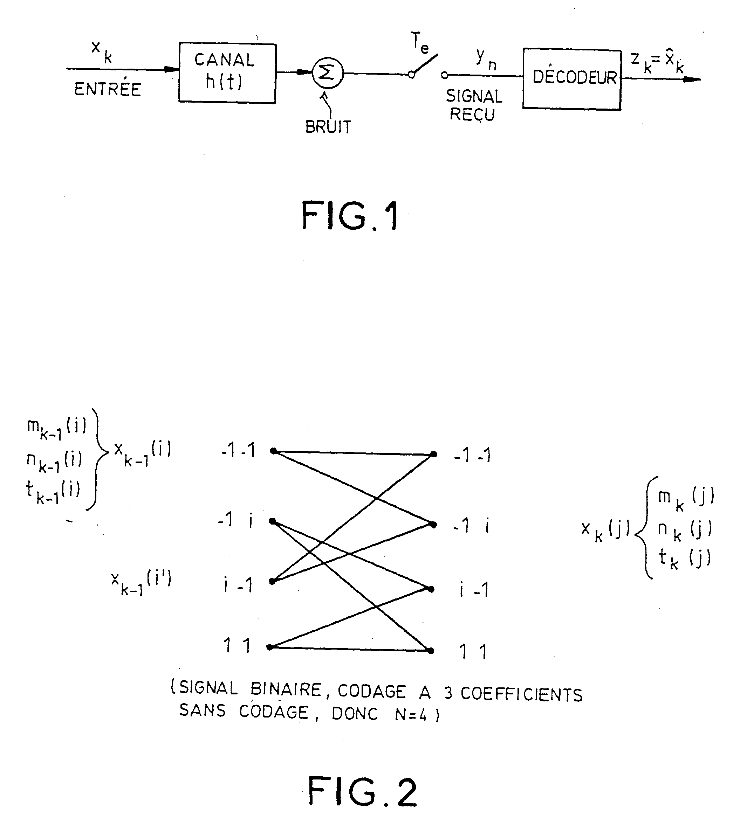

Une chaîne de communications peut être schématisé comme représentée en figure 1.

L'entrée du canal $x_k$ est modélisée par des Diracs espacés de la période symbole $T_s = 1/f_s$. Ils prennent aléatoirement un certain nombre de valeurs, qui sont par exemple +1 et -1 dans le cas binaire, avec éventuellement un codage.

Le canal a une réponse impulsionnelle en continu notée h(t). A sa sortie, il y a un bruit additif. Puis on échantillonne à la période :

$$1/f_e = T_e = p/q \, T_s \, (p/q \leq 1)$$

On obtient le signal échantillonné $y_n$ à une phase quelconque, inconnue a priori, $t_0$, que l'on cherchera à estimer :

$$y_n = \sum_k x_k h(nT_e - kT_s + t_0) + b_n$$

on a :

$$-0{,}5 \leq t_0/T_s < 0{,}5$$

Dans le cas synchrone, $t_0 = 0$

L'avantage de l'algorithme de VITERBI est qu'il propose des hypothèses sur la séquence d'entrée du canal.

Nous allons donc nous y appuyer en appliquant l'algorithme du gradient, dont la formulation générale est classique, à la fonction carré de l'erreur :

$$t_n/n = t_{n|n-1} - \alpha \, dE_n \, (t_{n|n-1})$$

où :

- $\alpha$ est un coefficient ;
- $t_{n|n-1}$ l'estimation de la phase à la date de l'échantillon $y_n$ quand le dernier reçu est $y_{n-1}$ ;
- $t_{n|n-1}$ est l'estimation de cette même phase une fois qu'on a enfin reçu $y_n$, et $E_n$ est le carré de l'erreur :

$$E_n \, (t_{n|n-1}) = e_n 2 \, (t_{n|n-1})$$

avec:

$$e_n(t) = \sum_k \; z_k \, h \, (nT_e - kT_s + t) - y_n \qquad (1)$$

où :

$z_k$ désigne une valeur supposée de $x_k$ par hypothèse.

L'idée est de prendre la formulation exacte de la dérivée puisqu'on peut la connaître, au lieu de faire une approximation, comme c'est le cas par exemple pour le LMS (Least Mean Square) :

$$dEn(t)/dt = 2 \, e_n(t) \sum_k \; z_k \, h' \, (nT_e - kT_s + t)$$
$$= 2 \, e_n \, (t) \, e_n' \, (t)$$

Il y a plusieurs façons de connaître la dérivée h'(t) du canal en fonction de h(t) (dont on dispose sous forme numérisée). On peut faire une différenciation, utiliser la FFT (Fast Fourier Transform), ou n'importe quelle méthode numérique. Ce travail sera fait une fois pour toutes avant l'exécution du décodage. Pour intégrer le nouvel échantillon $y_{n+1}$ dans l'estimateur, il faut ajouter le saut de phase inhérent à $f_e$ et $f_s$ :

$$t_{n+1|n} = t_{n|n} + p/q \text{ (noté } t_{n+1})$$

Dès qu'on a dépassé t = 0,5, on lui soustrait 1 et on incrémente de 1 l'indice k de l'échantillon $x_k$ que l'on cherche à estimer (inversement, si t < -0,5, il faut reculer d'un échantillon ; cela se produit rarement en pratique). En conclusion, on a

$$t_{n+1} = t_n + p/q - \alpha \, e_n(t_n) \, e_n'(t_n) \qquad (2)$$

En normalisant par exemple h et h' à 1 en leur valeur maximale, la simulation montre une assez bonne convergence pour $\alpha$ compris entre 0,1 et 0,2 lorsque le rapport signal sur bruit tourne autour de 20 dB.

L'application de l'opération (2) permet ainsi de déterminer la phase d'un échantillon de signal.

Au préalable, définissons le terme de branche-hypothèse :

L'algorithme de VITERBI manipule un treillis à N états x(1), x(2)...x(N). Par exemple N = 2 si on est en binaire et si on peut négliger la partie de la réponse canal en dehors d'un support de taille 2 $T_s$. A chaque étape temporelle k, pour chaque état x(j) qui constitue une hypothèse sur un nombre donné de symboles d'entrée (sur un bit isolé $x_k$ dans notre exemple), on recherche un état précédent probable, appelé survivant x(j'). Il est déterminé par l'exploration de toutes les paires autorisées (x(i), x(j)) pour les étapes (k-1, k) (dans notre exemple, toutes les paires $x_{k-1}/x_k$). Ce

sont ces paires à explorer que nous nommerons "branches-hypothèses". Elles représentent, en d'autres termes, un morceau de chemin.

Il est connu que dans l'algorithme de VITERBI, pour chaque branche-hypothèse, on dispose d'un échantillon $y_n$ de signal à décoder qui sert à calculer la métrique. Pour chacun des N états du treillis, on doit garder en mémoire les N métriques correspondantes m(1) ... m(N). On introduit ici la notion de poursuite de phase en gardant aussi en mémoire chacune des N estimations de phase t(1) ... t-N). On prend pour elles la valeur qu'elles avaient après soustraction de 1 lorsqu'il a fallu passer à l'échantillon suivant pour la branche-hypothèse considérée. Donc, à chaque état possible x(i) i = 1...N pour $x_k$, on veut attribuer un survivant, une nouvelle métrique et une réactualisation de l'estimation de phase.

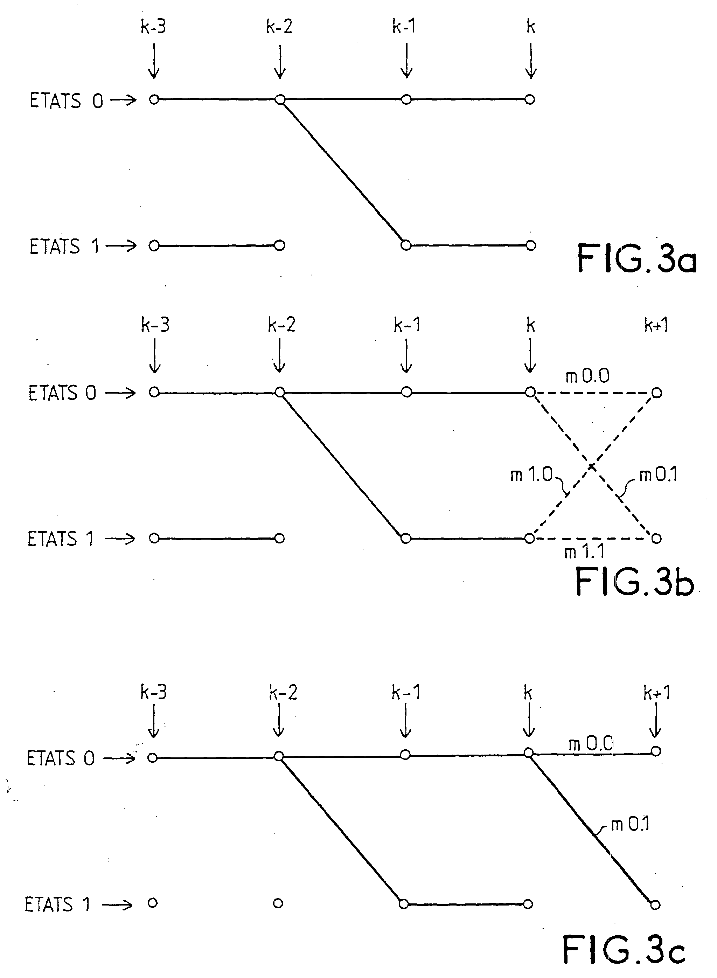

Par exemple, sur la figure 3a, on a reçu les échantillons k-3 à k. Pour chaque échantillon on a deux états. Le calcul des métriques conduisant à chaque état de chaque échantillon conduit à avoir, pour l'échantillon k, deux chemins possibles. Lorsqu'ensuite, on reçoit l'échantillon k+1, on calcule les métriques m0.0 et m0.1 entre l'état 0 de cet échantillon k+1 et les états 0 et 1 de l'échantillon précédent k (figure 3b). On choisit la métrique la plus faible, par exemple m0.0. On calcule également les métriques m1.0 et m1.1 entre l'état de l'échantillon k+1 et les états 0 et 1 de l'échantillon précédent k. On trouve, par exemple que la métrique la plus courte est m0.1. Selon cet exemple, on sélectionne donc les métriques m0.0 et m0.1 et comme on peut le voir sur la figure 3c, ce procédé permet d'éliminer le tronçon de chemin aboutissant à l'état 1 de l'échantillon k.

Un phénomène nouveau par rapport à l'algorithme de VITERBI classique est que, pour une branche-hypothèse, on peut avoir besoin de plusieurs échantillons de y au lieu d'un seul (surtout si p/q est différent de 1). Leur nombre fluctue en raison des variations de la phase estimée, et donc il peut varier selon l'état x(i). La première conséquence est que nous devons garder aussi en mémoire les valeurs n(1)... n(N) du dernier indice de y dépendant de chaque état. La deuxième conséquence est qu'on peut utiliser plusieurs valeurs de distances pour le calcul de la métrique (car rappelons qu'il y a une réestimation de phase par échantillon de y). L'idée est d'utiliser une métrique du type :

$$\sum_n e_n^2$$

où n parcourt les indices des échantillons de y correspondant à la branche-hypothèse.

Les échantillons de y dont la phase est proche de + ou - 0,5 sont moins porteurs d'informations que ceux dont la phase avoisine zéro, en raison de l'amplitude de la réponse canal et donc du rapport signal sur bruit en ces endroits (ou inversement selon l'origine choisie). On va donc, pour améliorer le taux d'erreur, pondérer cette métrique. D'autre part, pour ne pas déséquilibrer les métriques entre deux branches-hypothèses à nombres d'échantillons différents, il faut que la somme des poids soit toujours la même (on peut choisir 1 par exemple). Il s'ensuit que la métrique aura la forme :

$$m(i) = \frac{\sum\limits_n p(t_n)\, e_n^2}{\sum\limits_n p(t_n)} \tag{3}$$

où les $p(t_n)$ désignent les poids attribués aux phases $t_n$. Par exemple, on peut prendre une pondération uniforme, c'est-à-dire telle que p(t) = 1 pour tout t.

Le procédé selon l'invention appliquant l'algorithme de VITERBI peut se résumer de la façon suivante

A chaque étape temporelle k, on dispose des informations suivantes :

- les états x(1), x(2)... x(N)
- chacun à une métrique $m_k(1)$, $m_k(2)$ ... $m_k(N)$
- et une phase $t_k(1)$, $t_k(2)$ ... $t_k(N)$
- et un indice de y correspondant $n_k(1)$, $n_k(2)$ ... $n_k(N)$

Ces informations sont celles qui restent après le choix du survivant (voir figure 2).

L'ensemble des chemins survivants complets est mémorisé, comme pour l'algorithme de VITERBI classique, jusqu'à un certain rang k-P où P est appelé profondeur. A l'initialisation, pour k < P, on intègre de nouveaux échantillons de y dans le décodeur sans fournir encore d'états décodés $z_k$.

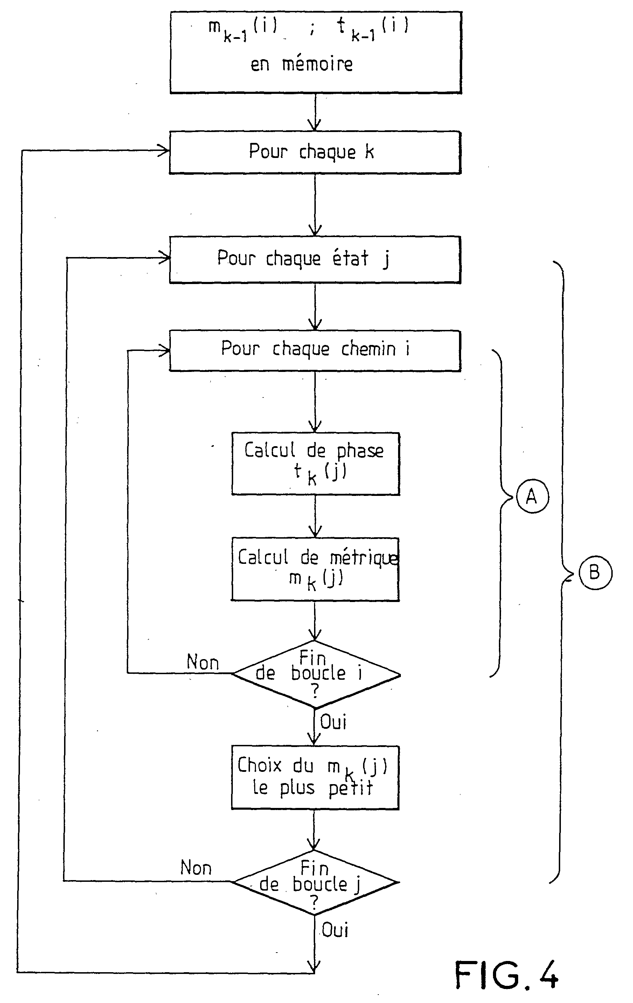

La figure 4 représente un organigramme de décodage simplifié selon l'invention dans lequel on suppose que la fréquence d'échantillonnage est égale à la fréquence du signal à décoder.

On suppose que pour un échantillon k donné à traiter on a en mémoire :

- les métriques $m_{k-1}(i)$ et les phases $t_{k-1}(i)$ pour tous les états i à l'étape (échantillon) précédent k-1.

Pour cet échantillon $x_k$, pour un premier état j et pour un premier chemin i conduisant à ce premier état j, on fait un calcul de phase et un calcul de métrique en appliquant les formules (en notation vectorielle) :

$$e_k = X^T(i, j) \cdot k(t_{k-1}(i)) - y_n$$

$$e'_k = X^T(i, j) \cdot k'(t_{k-1}(i))$$

$$\text{phase} : t'(i) = t_{k-1}(i) + 1 - \alpha \, e_k \, e'_k$$

$$\text{métrique} : m'(i) = e_k^2$$

On reboucle ce fonctionnement pour chaque chemin i.

Lorsque tous les chemins i conduisant à un état j ont été calculés on conserve en mémoire la phase et la métrique du chemin ayant la métrique le plus faible.

On reboucle ensuite ce fonctionnement pour chaque état j.

Lorsque tous les états j et les différents chemins i ont été calculés, on a en mémoire une métrique et une phase par état.

Le système est prêt à traiter l'échantillon suivant.

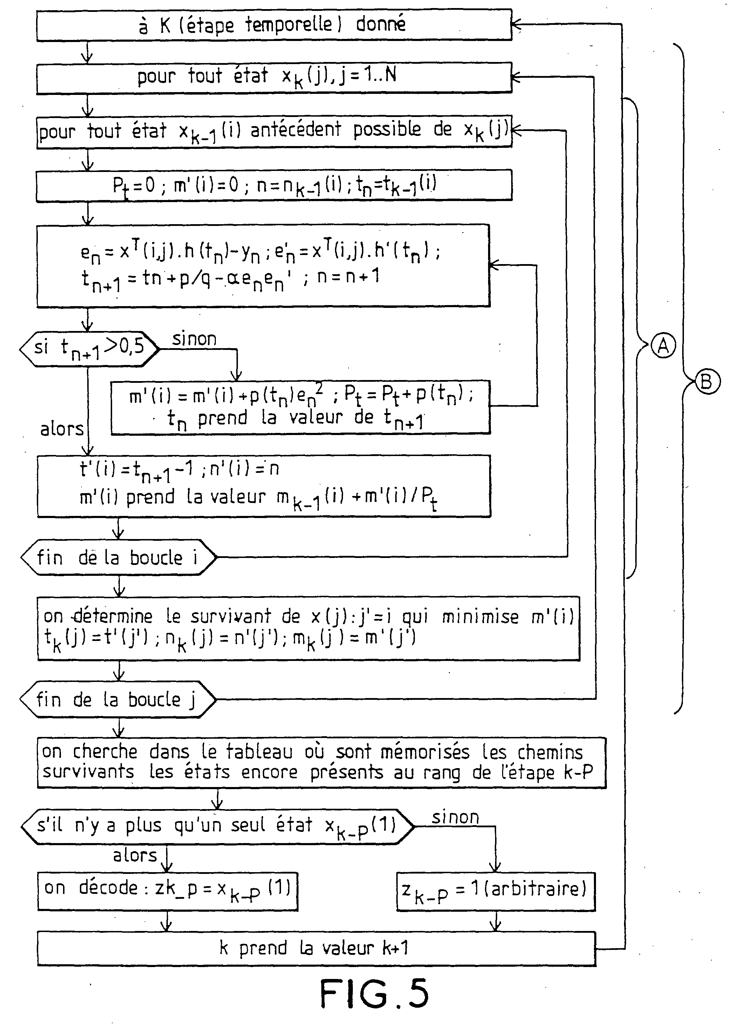

La figure 5 représente un organigramme d'un exemple de procédé détaillé selon l'invention.

Sur cet organigramme on retrouve la boucle (A) de l'organigramme de la figure 4 ainsi que la boucle (B).

On voit que la boucle (A) comporte différentes phases supplémentaires qui correspondent au cas où la fréquence d'échantillonnage est supérieure à la fréquence signal.

On remarque sur l'organigramme de la figure 5 la notation vectorielle pour exprimer le filtrage par h(t) et h'(t). Le vecteur noté x(i, j) est la concaténation des états x(i) et x(j) (donc correspond en principe à x(j) précédé d'un symbole) ; la dimension de x(i, j) est égale au nombre d'échantillons significatifs de la réponse h(t) échantillonnée. $P_t$ représente le dénominateur dans l'expression (3).

Selon cet organigramme :

- pour chaque configuration en entrée du canal, $x_k$ qu'on cherche à connaître, il y a N possibilités x(j) qu'on appelle états, chacun étant relié par des chemins à (au plus) N états x(i) qui correspondent à l'entrée précédente $x_{k-1}$ ;
- pour chaque état présent x(j), pour chaque état précédent x(i), pour chaque échantillon $y_n$ en sortie du canal, si l'indice temporel n correspond bien au chemin reliant $x_{k-1}$, à $x_k$ pour les états x(i) et x(j) considérés, on calcule la phase $t_n$ et un terme de métrique qui caractérise la longueur du chemin.

Lorsque tous les états précédents x(i) et tous les échantillons $y_n$ à prendre en compte ont été ainsi traités, on garde en mémoire un seul état précédent x(i), appelé survivant, choisi parce qu'il minimise la somme de la métrique qu'il avait précédemment et des termes de métriques qui viennent d'être calculés. Cette somme constitue la nouvelle métrique de l'état présent x(j), et elle sera aussi gardée en mémoire ainsi que la phase et le dernier indice n correspondants ;

- les choix des survivants permettent au fur et à mesure du fonctionnement de sélectionner des chemins probables et d'en éliminer d'autres de façon à ce qu'il n'en reste plus qu'un qui fournira l'entrée décodée. En effet, on recommence les opérations précédentes pour l'entrée k+1 et les nouveaux échantillons $y_n$ correspondants (n dépendant de l'état x(j) envisagé). Ce choix des survivants peut donc aboutir à abandonner des chemins conservés précédemment. On s'aperçoit qu'en remontant dans le passé, le nombre de chemins possibles diminue et que bientôt il n'en reste plus qu'un. Ce chemin unique est la séquence décodée selon le principe du maximum de vraisemblance.

L'invention propose donc d'une part un moyen de déterminer la phase des données transmises par rapport à l'horloge d'échantillonnage et d'autre part elle constitue une extension de l'algorithme de VITERBI.

Pour chaque branche du treillis de décodage qui se construit comme pour l'algorithme de VITERBI, on estime la phase récursivement par une méthode de gradient utilisant la dérivée de la réponse impulsionnelle du canal. Puis on intègre cette information dans le modèle de canal qui sert à calculer les métriques. Une fois les métriques calculées, on procède comme pour l'algorithme de VITERBI classique.

Remarquons que l'information de phase calculée par le procédé de l'invention devra être conservée pour chaque état du treillis, au même titre que la métrique obtenue par l'algorithme de VITERBI. Contrairement à la phase, la réponse impulsionnelle du canal est supposée connue à l'avance.

L'invention présente les avantages :

- de pouvoir travailler sur un signal échantillonné à une fréquence très basse en dépit du repliement, voire à la fréquence symbole elle-même ;
- d'utiliser le canal sans lui donner une réponse partielle particulière contrairement à ce qui est couramment proposé lorsqu'on utilise le décodage de VITERBI en enregistrement magnétique, ce qui fait une économie d'égalisation. On peut notamment travailler sur le canal de Nyquist (contrairement au décodeur de VITERBI simple, qui n'apporte rien dans ce cas).

## Revendications

1. Procédé de reconstitution de séquences de symboles numériques se succédant à une période régulière (Ts), transmises par un canal de transmission dont on connait la réponse impulsionnelle (h), ces signaux étant échantillonnés par un signal d'horloge dont la période (Te) est différente de celle des symboles, selon lequel on estime récursivement les déphasages entre échantillons et symboles selon un critère de maximum de vraisemblance prenant en compte, à chaque réactualisation de l'estimation, l'hypothèse de séquence d'entrée la plus vraisemblable,

   **caractérisé par le fait que** le calcul des déphasages se fait selon la formulation du gradient

$$t_{n+1} = t_n + p/q - \alpha\, e_n\,(t_n)\, e'_n\,(t)$$

   dans laquelle on a :

   $t_{n+1}$ :     le signal de déphasage à calculer pour le signal de donnée de rang $k_{n+1}$ ;
   $t_n$ :     le signal de déphasage calculé antérieurement pour le signal de donnée de rang $k_n$ ;
   $p/q$ :     le rapport de la période d'horloge sur la période des données ;
   $\alpha$ :     un coefficient d'adaptation ;
   $e_n\,(t_n)$ :     l'erreur entre un échantillon réel et la valeur théorique qui avait été prévue pour cet échantillon ;
   $e'_n\,(t_n)$ :     la dérivée de la valeur de $e_n\,(t_n)$ par rapport à $t_n$ ;

   la valeur $e_n\,(t_n)$ étant donnée par :

$$e_n\,(t) = \Sigma_k\, z_k\, h\,(n\,Te - kT_s + t) - y_n$$

   avec :

   $z_k$ :     une valeur théorique de signal de donnée ;
   $h$ :     une réponse impulsionnelle du canal

   Et la valeur $e'_n(t_n)$ étant donnée par :

$$e'_n\,(t) = \sum_k Z_k\, h'\,(nT_e - kT_s + t)$$

   avec $h'$ dérivée de la réponse impulsionnelle du canal par rapport au temps.

**2.** Procédé selon la revendication 1, **caractérisé en ce que** :

- pour chaque configuration en entrée du canal, $x_k$ qu'on cherche à connaître, il y a N possibilités x(j) qu'on appelle états, chacun étant relié par des chemins à (au plus) N états x(i) qui correspondent à l'entrée précédente $x_{k-1}$ ;
- pour chaque état présent x(j), pour chaque état précédent x(i), pour chaque échantillon $y_n$ en sortie du canal, si l'indice temporel n correspond bien au chemin reliant $x_{k-1}$, à $x_k$ pour les états x(i) et x(j) considérés, on calcule la phase $t_n$ et un terme de métrique qui caractérise la longueur du chemin ; lorsque tous les états précédents x(i) et tous les échantillons $y_n$ à prendre en compte ont été ainsi traités, on garde en mémoire un seul état précédent x(i), appelé survivant, choisi parce qu'il minimise la somme de la métrique qu'il avait précédemment et des termes de métrique qui viennent d'être calculés, cette somme constituant la nouvelle métrique de l'état présent x(j), étant aussi gardée en mémoire ainsi que la phase et le dernier indice n correspondants ;
- les choix des survivants permettant au fur et à mesure du fonctionnement de sélectionner des chemins probables et d'en éliminer d'autres de façon à ce qu'il n'en reste plus qu'un qui fournira l'entrée décodée.

**3.** Procédé selon la revendication 1, **caractérisé en ce qu'**il est appliqué à un procédé de décodage utilisant l'algorithme d'estimation de séquence selon le maximum de vraisemblance (MLSE), un calcul de déphasage étant réalisé en même temps qu'un calcul de métrique prévu dans un algorithme d'estimation de séquence selon le maximum de vraisemblance (MLSE).

**4.** Procédé selon la revendication 2, **caractérisé en ce que** la métrique du chemin reliant un état à un état précédent est réalisée en faisant l'opération :

$$m_{(i)} = \frac{\Sigma_n p(t_n)e_n^2}{\Sigma_n p(t_n)}$$

où $p(t_n)$ représente un poids attribué aux phases $(t_n)$ ;
puis chaque phase estimée et chaque métrique pour chaque état est mis en mémoire ; ce processus étant réalisé pour chaque échantillon d'une donnée.

**5.** Procédé selon la revendication 4, **caractérisé en ce que** le processus de calcul est réalisé pour plusieurs échantillons d'une donnée jusqu'à ce que la phase $t_{n+1}$ dépasse une valeur de seuil.

**6.** Procédé selon la revendication 5, **caractérisé en ce que** la valeur de seuil est 0,5.

**Patentansprüche**

**1.** Verfahren zur Wiederherstellung von Sequenzen digitaler Symbole, die mit einer regelmäßigen Periode (Ts) aufeinanderfolgen und über einen Übertragungskanal übertragen werden, dessen Impulsantwort (h) bekannt ist, wobei diese Signale mit einem Taktsignal abgetastet werden, dessen Periode (Te) von jener der Symbole verschieden ist, wobei bei dem Verfahren die Phasenverschiebungen zwischen Abtastwerten und Symbolen gemäß einem Kriterium maximaler Wahrscheinlichkeit rekursiv geschätzt werden, wobei das Kriterium bei jeder erneuten Aktualisierung der Schätzung die Hypothese der wahrscheinlichsten Eingangssequenz aufstellt,
**dadurch gekennzeichnet, daß** das Berechnen der Phasenverschiebungen gemäß der folgenden Formulierung des Gradienten erfolgt:

$$t_{n+1} = t_n + p/q - \alpha e_n(t_n)e'_n(t)$$

worin:

$t_{n+1}$: Phasenverschiebungssignal, das für das Datensignal mit Rang $k_{n+1}$ zu berechnen ist;

$t_n$: Phasenverschiebungssignal, das vorher für das Datensignal mit Rang $k_n$ berechnet wird;

p/q:     Verhältnis der Taktperiode zu der Datenperiode;

$\alpha$:     Anpassungskoeffizient;

$e_n(t_n)$:     Fehler zwischen einem realen Abtastwert und dem theoretischen Wert, der für diesen Abtastwert vorhergesagt wurde;

$e'_n(t_n)$:     Ableitung des Wertes $e_n(t_n)$ nach $t_n$;

    wobei der Wert $e_n(t_n)$ gegeben ist durch:

$$e_n(t) = \Sigma_k z_k h(nTe - kTs + t) - y_n$$

    mit:

$z_k$:     theoretischer Wert des Datensignals;

h:     Impulsantwort des Kanals

    und wobei der Wert $e'_n(t_n)$ gegeben ist durch:

$$e'_n(t) = \Sigma_k z_k h'(nTe - kTs + t)$$

    wobei h' die Ableitung der Impulsantwort des Kanals nach der Zeit ist.

2.   Verfahren nach Anspruch 1, **dadurch gekennzeichnet, daß**:

-   für jede Eingangskonfiguration des Kanals $x_k$, deren Kenntnis erlangt werden soll, N Möglichkeiten x(j) vorhanden sind, die Zustände genannt werden, wovon jeder über Wege mit (höchstens) N Zuständen x(i) verbunden ist, die dem vorhergehenden Eingang $x_{k-1}$ entsprechen;

-   für jeden momentanen Zustand x(j), für jeden vorhergehenden Zustand x(i), für jeden Abtastwert $y_n$ am Ausgang des Kanals, falls der Zeitindex n dem Weg, der $x_{k-1}$ mit $x_k$ für die betrachteten Zustände $x_i$ und $x_j$ verbindet, gut entspricht, die Phase $t_n$ und ein metrischer Term, der die Länge des Wegs kennzeichnet, berechnet werden; wenn sämtliche vorhergehenden Zustände x(i) und sämtliche Abtastwerte $y_n$, die zu berücksichtigen sind, auf diese Weise behandelt worden sind, ein einziger vorhergehender Zustand x(i), der Überlebender genannt wird und gewählt wird, weil er die Summe aus der Metrik, die er vorher hatte, und aus den metrischen Termen, die eben berechnet worden sind, minimal macht, in einem Speicher gespeichert wird, wobei diese Summe die neue Metrik des momentanen Zustandes x(j) bildet, der ebenfalls zusammen mit der entsprechenden Phase und dem entsprechenden letzten Index n im Speicher gespeichert wird;

-   wobei die jeweilige Wahl der Überlebenden ermöglicht, nach Maßgabe der Funktionsweise die wahrscheinlichen Wege auszuwählen und andere zu beseitigen, derart, daß nur einer übrigbleibt, der den decodierten Eingang liefern wird.

3.   Verfahren nach Anspruch 1, **dadurch gekennzeichnet, daß** es auf ein Decodierungsverfahren angewendet wird, das den Algorithmus (MLSE) der Schätzung von Folgen gemäß maximaler Wahrscheinlichkeit verwendet, wobei eine Berechnung der Phasenverschiebung gleichzeitig mit einer Berechnung der Metrik, die in einem Algorithmus (MLSE) der Schätzung von Folgen gemäß maximaler Wahrscheinlichkeit vorgesehen ist, ausgeführt wird.

4.   Verfahren nach Anspruch 2, **dadurch gekennzeichnet, daß** die Metrik des Weges, der einen Zustand mit einem vorhergehenden Zustand verbindet, gemäß der folgenden Operation ausgeführt wird:

$$m_{(i)} = \frac{\sum\limits_{n} p(t_n) e_n^2}{\sum\limits_{n} p(t_n)}$$

wobei $p(t_n)$ ein den Phasen $(t_n)$ zugewiesenes Gewicht repräsentiert; und
daß dann jede geschätzte Phase und jede Metrik für jeden Zustand gespeichert werden; wobei dieser Prozeß für jeden Datenabtastwert ausgeführt wird.

5. Verfahren nach Anspruch 4, **dadurch gekennzeichnet, daß** der Rechenprozeß für mehrere Abtastwerte einer Dateneinheit ausgeführt wird, bis die Phase $t_{n+1}$ einen Schwellenwert übersteigt.

6. Verfahren nach Anspruch 5, **dadurch gekennzeichnet, daß** der Schwellenwert 0,5 beträgt.

**Claims**

1. Procedure for reconstructing sequences of digital symbols following one another at a regular period (Ts), transmitted by a transmission channel whose impulse response (h) is known, these signals being sampled by a clock signal whose period (Te) is different from that of the symbols, according to which procedure the phase shifts between samples and symbols are estimated recursively according to a maximum likelihood criterion taking into account, at each update of the estimation, the most likely input sequence hypothesis,
**characterized in that** the calculation of the phase shifts is carried out according to the gradient formulation

$$t_{n+1} = t_n + p/q - \alpha\, e_n(t_n)\, e'_n(t)$$

in which we have:

$t_{n+1}$:     the phase shift signal to be calculated for the data signal of rank $k_{n+1}$;
$t_n$:     the previously calculated phase shift signal for the data signal of rank $k_n$;
$p/q$:     the ratio of the clock period to the period of the data;
$\alpha$:     an adaptation coefficient;
$e_n(t_n)$ :     the error between a real sample and the theoretical value which had been forecast for this sample;
$e'_n(t_n)$ :     the derivative of the value of $e_n(t_n)$ with respect to $t_n$;

the value $e_n(t_n)$ being given by:

$$e_n(t) = \Sigma_k\, z_k\, h\,(n\,Te - kT_s + t) - y_n$$

with:

$z_k$:     a data signal theoretical value;
$h$:     an impulse response of the channel

and the value $e'_n(t_n)$ being given by:

$$e'_n(t) = \sum_k Z_k h'(nT_e - kT_s + t)$$

with $h'$ the derivative of the impulse response of the channel with respect to time.

2. Procedure according to Claim 1, **characterized in that**:

- for each configuration at the input of the channel, $x_k$ that one seeks to ascertain, there are N possibilities x(j) that are called states, each being linked by paths to (at most) N states x(i) which correspond to the previous input $x_{k-1}$;
- for each present state x(j), for each previous state x(i), for each sample $y_n$ at the output of the channel, if the temporal index n indeed corresponds to the path linking $x_{k-1}$ to $x_k$ for the states x(i) and x(j) considered, we calculate the phase $t_n$ and a metric term which characterizes the length of the path; when all the previous states x(i) and all the samples $y_n$ to be taken into account have been thus processed, we keep in memory a single previous state x(i), called the survivor, chosen because it minimizes the sum of the metric which it had previously and metric terms which have just been calculated, this sum constituting the new metric of the present state x(j), also being kept in memory as are the corresponding phase and the corresponding last index n;
- the choices of the survivors making it possible as matters proceed to select probable paths and to eliminate others so that there now remains just one which will provide the decoded input.

3. Procedure according to Claim 1, **characterized in that** it is applied to a decoding procedure using the maximum likelihood sequence estimation (MLSE) algorithm, a phase shift calculation being carried out at the same time as a metric calculation scheduled in a maximum likelihood sequence estimation (MLSE) algorithm.

4. Procedure according to Claim 2, **characterized in that** the metric of the path linking a state to a previous state is effected by carrying out the operation:

$$m_{(i)} = \frac{\Sigma_n p(t_n)e_n^2}{\Sigma_n p(t_n)}$$

where $p(t_n)$ represents a weight allocated to the phases $(t_n)$ ;
then each estimated phase and each metric for each state is placed in memory; this process being carried out for each sample of a data item.

5. Procedure according to Claim 4, **characterized in that** the calculation process is carried out for several samples of a data item until the phase $t_{n+1}$ exceeds a threshold value.

6. Procedure according to Claim 5, **characterized in that** the threshold value is 0.5.

$x_k$

ENTRÉE

CANAL
h(t)

$\Sigma$

BRUIT

$T_e$

$y_n$

SIGNAL
REÇU

DÉCODEUR

$z_k = \hat{x}_k$

# FIG.1

$\left.\begin{array}{l} m_{k-1}(i) \\ n_{k-1}(i) \\ t_{k-1}(i) \end{array}\right\} x_{k-1}(i)$

$x_{k-1}(i')$

-1 -1

-1 i

i -1

1 1

-1 -1

-1 i

i -1

1 1

$x_k(j) \left\{\begin{array}{l} m_k(j) \\ n_k(j) \\ t_k(j) \end{array}\right.$

(SIGNAL BINAIRE, CODAGE A 3 COEFFICIENTS
SANS CODAGE, DONC N=4)

# FIG.2

FIG.3a

FIG.3b

FIG.3c

FIG.4

à K (étape temporelle) donné

pour tout état $x_k(j), j = 1..N$

pour tout état $x_{k-1}(i)$ antécédent possible de $x_k(j)$

$P_t = 0$ ; $m'(i) = 0$ ; $n = n_{k-1}(i)$ ; $t_n = t_{k-1}(i)$

$e_n = x^T(i,j).h(t_n) - y_n$ ; $e'_n = x^T(i,j).h'(t_n)$ ;
$t_{n+1} = t_n + p/q - \alpha e_n e_n'$ ; $n = n+1$

si $t_{n+1} > 0,5$ ────sinon────

$m'(i) = m'(i) + p(t_n) e_n^2$ ; $P_t = P_t + p(t_n)$ ;
$t_n$ prend la valeur de $t_{n+1}$

alors

$t'(i) = t_{n+1} - 1$ ; $n'(i) = n$
$m'(i)$ prend la valeur $m_{k-1}(i) + m'(i)/P_t$

fin de la boucle i

on détermine le survivant de $x(j)$ : $j' = i$ qui minimise $m'(i)$
$t_k(j) = t'(j')$ ; $n_k(j) = n'(j')$ ; $m_k(j) = m'(j')$

fin de la boucle j

on cherche dans le tableau où sont mémorisés les chemins
survivants les états encore présents au rang de l'étape k-P

s'il n'y a plus qu'un seul état $x_{k-P}(1)$ ────sinon────

alors

on décode : $zk\_p = x_{k-P}(1)$

$z_{k-P} = 1$ (arbitraire)

k prend la valeur k+1

Ⓐ

Ⓑ

# FIG.5